# EUROPEAN PATENT SPECIFICATION

(11) **EP 2 324 615 B1**
(45) Date of publication and mention of the grant of the patent: **02.04.2014**
(21) Application number: 09750982.2
(22) Date of filing: 21.05.2009
(51) Int. Cl.: H04L 29/06, H04L 12/26, H04L 12/24

(54) **SYSTEM AND METHOD FOR DISCOVERY OF NETWORK ENTITIES**
SYSTEM UND VERFAHREN ZUR ENTDECKUNG VON NETZWERKENTITÄTEN
SYSTÈME ET PROCÉDÉ POUR DÉCOUVRIR DES ENTITÉS DE RÉSEAU

(30) Priority: 21.05.2008 US 54945 P
(43) Date of publication of application: 25.05.2011
(60) Divisional application: 13196135.1
(73) Proprietor: McAfee, Inc., Santa Clara, CA 95054 (US)
(72) Inventor: SHERLOCK, Kieran, Gerard, Palo Alto, CA 94306 (US); VALENTE, Luis Filipe Pereira, Palo Alto, CA 94303 (US); PEARCY, Derek, Patton, San Francisco, CA 94133 (US); COOPER, Geoffrey, Howard, Palo Alto, CA 94301 (US)
(74) Representative: Granleese, Rhian Jane
(86) International application number: PCT/US2009/003161
(87) International publication number: WO 2009/142751

(56) References cited:
- EP-A- 1 054 529
- WO-A-02/03219
- WO-A-2008/044225
- CA-A1- 2 572 528
- US-A1- 2006 277 184
- US-A1- 2008 109 870
- KOMLODI A ET AL: "A User-centered Look at Glyph-based Security Visualization" VISUALIZATION FOR COMPUTER SECURITY, 2005. (VIZSEC 05). IEEE WORKSHOP ON MINNEAPOLIS, MN, USA OCT. 26, 2005, PISCATAWAY, NJ, USA,IEEE, PISCATAWAY, NJ, USA, 26 October 2005 (2005-10-26), page 3, XP031385959 ISBN: 978-0-7803-9477-3
- JITIAN XIAO ET AL: "Measuring similarity of interests for clustering Web-users" DATABASE CONFERENCE, 2001. ADC 2001. PROCEEDINGS. 12TH AUSTRALASIAN GOLD COAST, QLD., AUSTRALIA 29 JAN.-2 FEB. 2001, LOS ALAMITOS, CA, USA,IEEE COMPUT. SOC, US, 29 January 2001 (2001-01-29), pages 107-114, XP010532230 ISBN: 978-0-7695-0966-2
- JAIN A K ET AL: "Data clustering: a review" ACM COMPUTING SURVEYS, ACM, NEW YORK, NY, US, US, vol. 31, no. 3, 1 September 1999 (1999-09-01), pages 264-323, XP002165131 ISSN: 0360-0300

## Description

### Technical Field

The disclosure relates generally to network security and in particular to systems and methods for network discovery.

### Limited Copyright Waiver

A portion of the disclosure of this patent document contains material to which the claim of copyright protection is made. The copyright owner has no objection to the facsimile reproduction by any person of the patent document or the patent disclosure, as it appears in the U.S. Patent and Trademark Office file or records, but reserves all other rights whatsoever.

### Background

Companies today face the task of continuously monitoring and verifying who is accessing critical business systems, what they are doing during each access and where they are accessing from. The challenge is that, when manually attempted, visibility into your network and your critical business applications is often nothing more than a static, after-the-fact "snapshot in time." U.S. Patent Application No. 11/854,392, entitled "Identities Correlation Infrastructure for Passive Network Monitoring", filed September 12, 2007, describes, however, one approach for identifying and continuously monitoring user access to critical business systems.

The systems proposed to date require administrators to identify users and group them with other users. In addition, the systems to date present data in ways that can be difficult to understand. What is needed is a system and method for identifying and classifying users, and for monitoring network activity as a function of the classifications of network users. What is also needed is a system and method for displaying network activity based on identified groups of users in a clear and concise manner. Finally, what is needed is a system and method for controlling network access as a function of the identified groups of users.

US2008/109870 describes identities correlation infrastructure for passive network monitoring.

CA2572528 describes a method and system for user network behavioural based anomaly detection.

According to an aspect of the present invention there is provided a method of discovering entities in a network as recited in claim 1.

According to an aspect of the present invention there is provided a network monitor as recited in claim 6.

### Brief Description of the Drawings

FIGS. 1a and 1b illustrate computer systems having one or more network monitors;
FIGS. 2a and 2b illustrate embodiments of the network monitors of FIGS. 1a and 1b;
FIGS. 3-6a illustrate methods of displaying and controlling identity-based network traffic;
FIG. 6b illustrates a method of controlling network behavior;
FIG. 7 illustrates a method of displaying identity-based behavior across networks connected by one or more firewalls;
FIG. 8 illustrates a method of controlling network behavior across networks connected by one or more firewalls;
FIGS. 9a-9c illustrate methods of assigning users to groups;

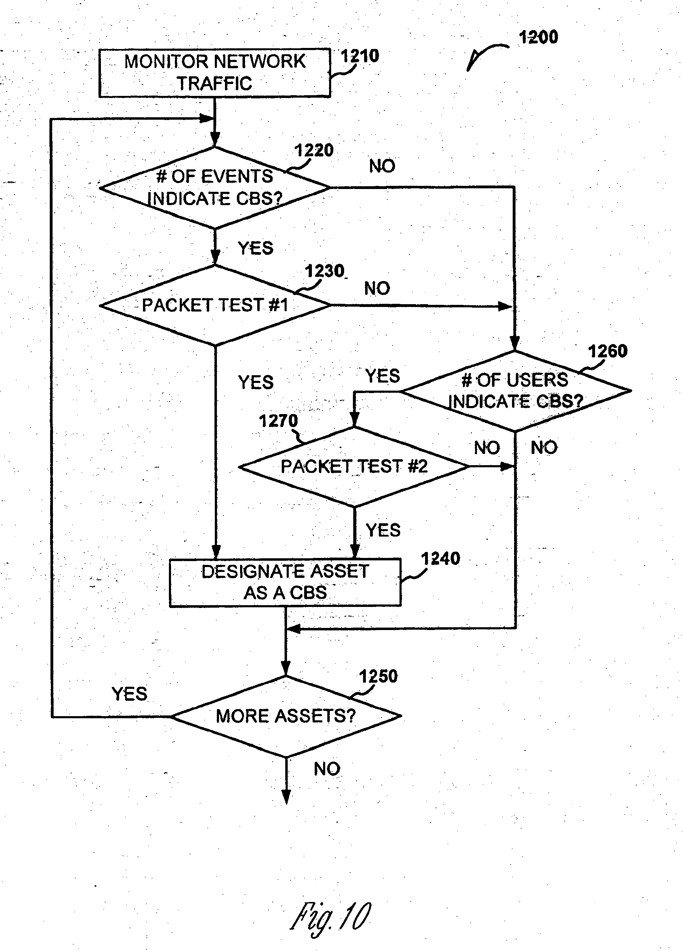

FIG. 10 illustrates a method of asset discovery;
FIG. 11 illustrates a method of using discovery for policy development;
FIG. 12 is a schematic diagram illustrating a medium having an instruction set for implementing the systems and methods described.

### Detailed Description

Unsecured and improper practices by authorized insiders can create substantial risk to critical business systems. Outsourcers, offshore developers, contractors, careless employees, partners, joint ventures, and others must be monitored. Yet monitoring security to the standards recommended by CERT and others is nearly impossible to do in real time with traditional security tools. And using log data to get this level of information can drain valuable IT resources while still falling short of delivering real-time operational visibility and control.

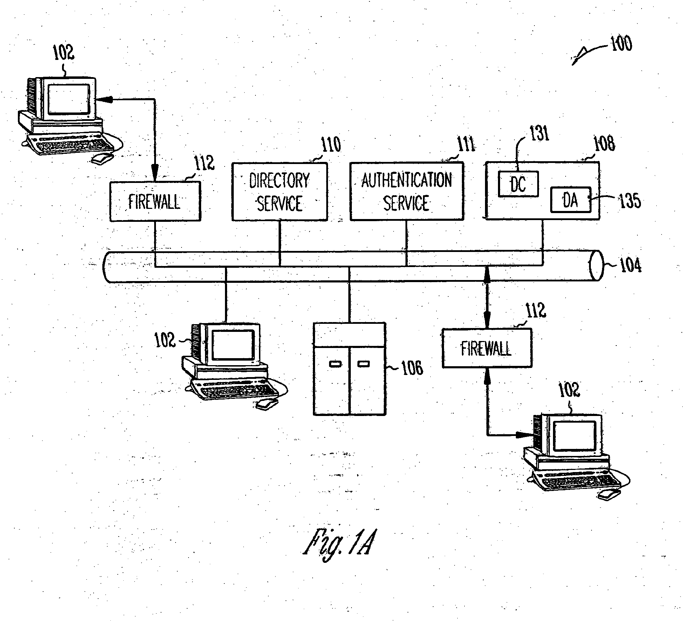

Fig. 1a illustrates a system which monitors user behavior to provide automated, identity-based monitoring of user accesses to critical business systems. In Fig. 1a, computer system 100 includes a number of workstations 102 and one or more data centers 106 having one or more servers or mainframes each. Workstations 102 communicate with data centers 106 over a network 104. In the embodiment shown, some of the workstations 102 communicated with data center 106 via a firewall 112 communicatively coupled to network 104.

In computer system 100 of Fig. 1a, a network monitor 108 continuously monitors network traffic on network 104. In one embodiment, monitor 108 includes a data collector (DC) 131 connected to a data analyzer (DA) 135. Data collector 131 passively captures network traffic. Data analyzer 135 decodes and analyzes the captured network traffic.

In one embodiment, network monitor 108 provides automated, identity-based monitoring to keep computer system 100 in compliance and in control. This comprehensive monitoring solution delivers complete visibility and verification of who is doing what and where on an automated, continuous, real-time basis. By identity, we mean the actual user name, group name, and role correlated to behavior and delivered in real time-not after the fact.

In one embodiment, network monitor 108 communicates with a directory service 110 and an authentication service 111 over network 104. In one such embodiment, network monitor 108 integrates with existing directory stores, such as Microsoft Active Directory, leveraging actual user and group information to dynamically determine when a user accesses the network. In another such embodiment, network monitor 108 integrates with existing directory stores, such as Microsoft Active Directory, leveraging actual user, group, and role information to dynamically determine when a user accesses the network. Network monitor 108 queries the directory in real time, and then correlates users and their groups with all related access and activity. In one embodiment, user identity credentials are detected in the traffic without the use of any agents on the client or server side.

For example, a user named jsmith logs into the network. Network monitor 108 identifies this action and immediately determines that jsmith is part of the marketing group and has a job role that allows her access to the marketing database and a joint-venture database but not the finance database. Network monitor 108 continues to monitor network traffic to censure that jsmith's actions abide by this policy as well as all other established security controls.

In one embodiment, monitors 108 passively capture, decode, and analyze traffic via native deep packet inspection (DPI). They use port mirroring or passive network taps to obtain full packet data for protocol decoding up to the application layer (layer 7). This level of detail is often required to ensure a tamperproof view of network activity within critical data centers and critical business systems.

In one such embodiment, flow monitors within monitor 108 leverage existing flow-based data from Cisco Netflow, Juniper J-Flow, and others for analysis. This broader network view is often useful for gaining a cost-effective, enterprise-wide view of who is doing what and from where across the entire network, including remote locations.

In another such embodiment, network monitors are used in a "Mixed" mode that combines both DPI and flow-based data.

In one embodiment, network monitor 108 operates on firewall audit logs to analyze traffic through the firewall. In one such embodiment, network entity discovery (e.g., user discovery or asset discovery) is used to drive-security policy for both the network monitor 108 and the firewall 112.

In one embodiment, network monitor 108 is part of a tiered architecture that comprises network monitors 108, control centers and report appliances. This approach has the deployment advantages of an out-of-band, network-based solution without the need for agents or application integration.

In such an approach, network monitors 108 provide the cornerstone monitoring function. Monitors 108 are network-based and designed to capture and analyze critical traffic data inside the network using one of the three methods described above.

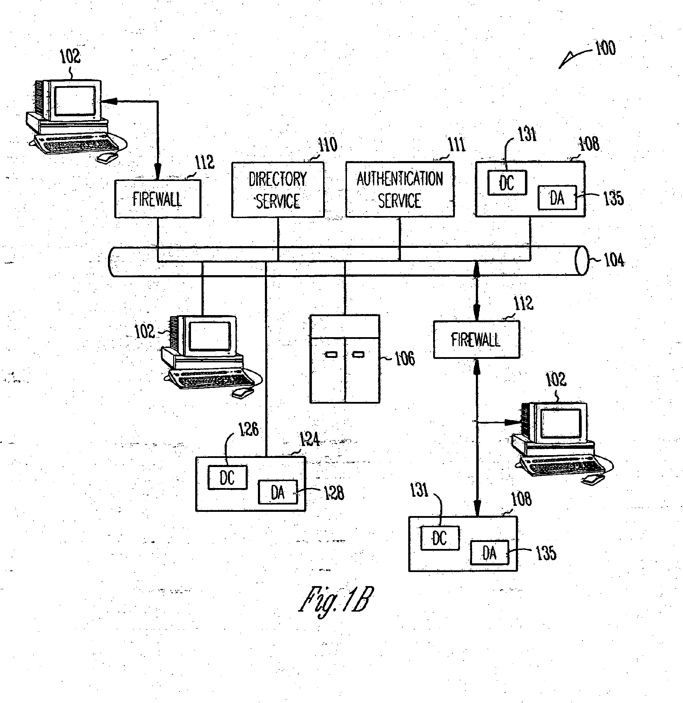

As shown in Fig. 1b, in some embodiments, computer system 100 includes two or more network monitors 108 and a control center 124. Control center 124 consolidates and centralizes the ongoing monitoring, analysis, and management of all sizes of deployments-everything from a few network monitors 108 to a worldwide deployment of network monitors 108.

In one such embodiment, large entities can easily stratify and delegate their management capabilities with control center 124. For example, you could retain the ability to analyze and control network activity at an overall organizational level while also allowing your various operating divisions or security zones to monitor and manage network activity that's specific to their group.

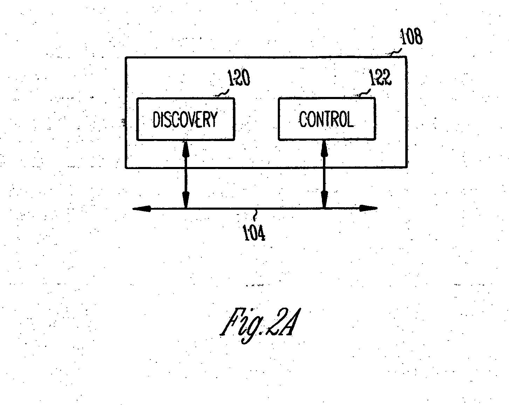

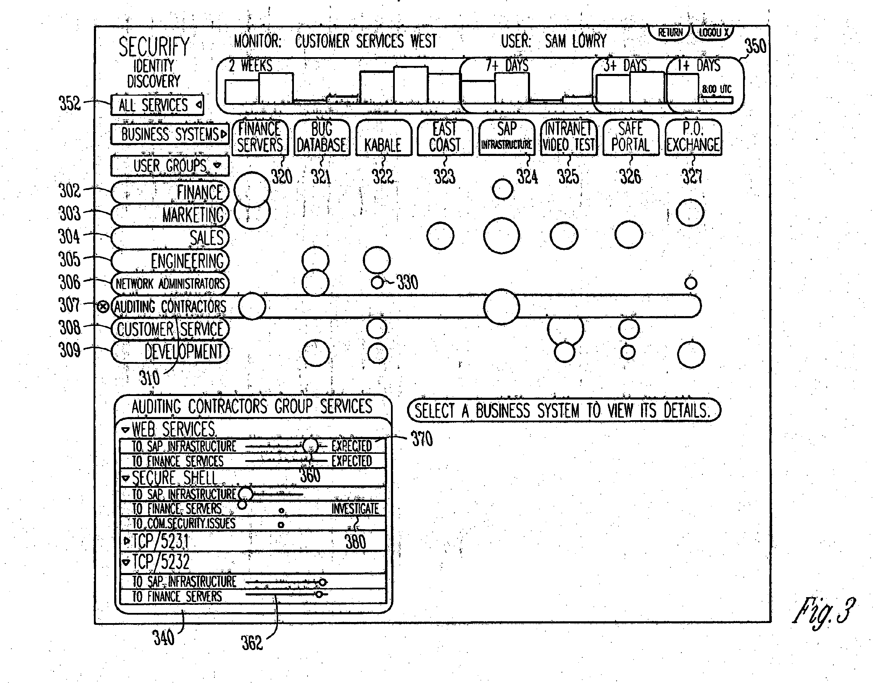

In one embodiment, as is shown in Fig. 2a, network monitor 108 includes a discovery module 120 and a control module 122. In one such embodiment, discovery module 120 includes an automated discovery capability that helps uncover the "who, what, and where" during the planning phase of change projects, i.e., determining which users are accessing what applications on which computers, without requiring any prior knowledge of the network behavior. A Discovery Dashboard such as is shown in Fig. 3 provides a single view of passively monitored traffic and correlates user groups and their associated activity on critical business systems.

In one embodiment, discovery module 120 provides additional analysis capabilities, including the ability to focus on a single system. For example, you could concentrate network monitor 108 on a specific CRM or accounting system. Likewise, you can use network monitor 108 to discover all user groups or focus on a specific user group, office location, or network boundary. For instance, you could monitor for sales representatives accessing a particular system from headquarters. Additional information on what users are doing is also provided, including protocol decode, ports, bandwidth, URLs, and commands. This level of detail is extremely useful for network rezoning and segmentation, or application and server moves that might impact users' ability to access their applications.

As noted above, in some embodiments, network monitor 108 communicates directly with existing network directories, leveraging-existing groups and memberships. Additionally, network monitor 108 may leverage local directories for special-purpose-groups and memberships.

In one embodiment, control module 122 applies user-based policies and then graphically illustrates the network usage of users and groups to critical systems, clearly denoting what activity is acceptable, what activity is unacceptable and what activity merits a closer look by the security and operations teams.

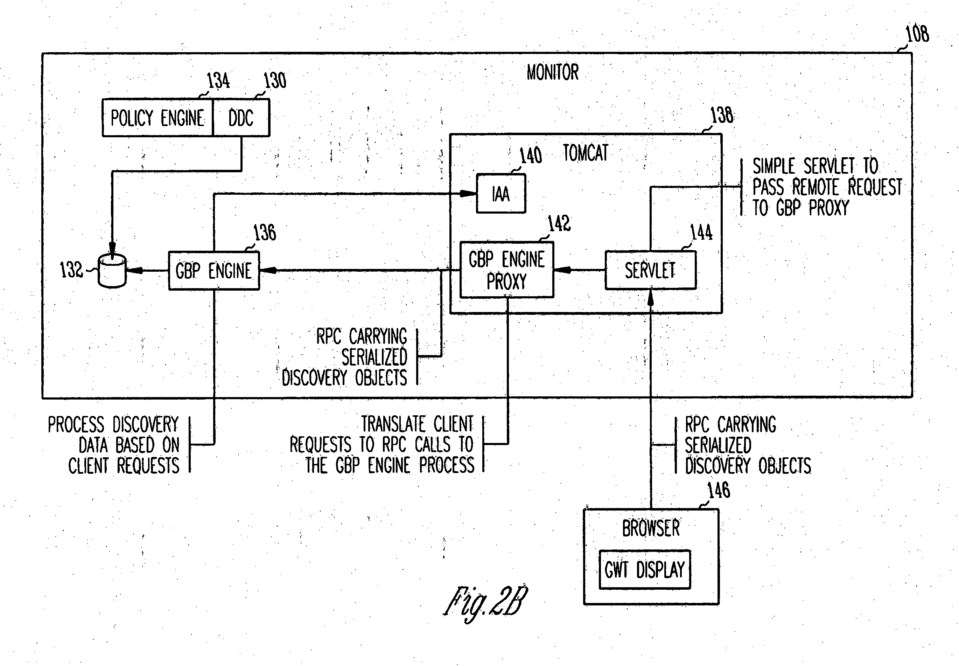

Fig. 2b illustrates one embodiment of network monitor 108. In Fig. 2b, network monitor 108 includes a discovery data collector (DDC) 130 connected to a discovery data store 132 and a policy engine 134. Network monitor 108 also includes a Group Based Profiling (GBP) engine 136 connected to a control module 138. Control module 138 includes an Identity Acquisition Agent (IAA) 140, a GBP engine proxy 142 and a servlet module 144. In one embodiment, users communicate with network monitor 108 via a web browser 146.

In the embodiment shown, DDC 130 runs on the Monitor and stores its data locally. In other embodiments, DDC 130 or discovery data store 132 could be accessed remotely from network monitor 108. In one such embodiment, control center 124 includes a data store (DS) 126 connected to a data analyzer 128 (as shown in Fig. 1b). Data store 126 stores discovery data accessed remotely from network monitor 108. Data analyzer 128 analyzes the network monitor data.

In the embodiment shown, GBP engine 136 runs on monitor 108, processing the DDC data in the data discovery data store 132 at the user's request. In one such embodiment, the GBP engine runs as a standalone java daemon, exporting an interface to its client.

In one such embodiment, the UI processes GBP data for the local Monitor only. In one such embodiment, GBP data generated by the GBP engine in response to UI initiated queries is used by servlet module 144 to generate UI pages that are in turn displayed by a browser.

In some embodiments, as is shown in Fig. 2b, GBP engine 136 includes an interface to IAA 140 for obtaining group membership information.

In one embodiments, the GBP engine 136 runs in the Monitor aggregating and processing data provided by the DDC 130. The GBP engine 136 will be described in greater detail below.

The GBP engine 136 provides an interface to the GBP Engine Proxy 142 through which the Web UI components make requests and receive results.

In one embodiment, the GBP Engine Proxy 142 (hereinafter referred to as "proxy 142") uses a socket interface to communicate with the GBP Engine 136. This interface supports multiple concurrent asynchronous requests. Each request to the proxy is made on a separate thread and that thread is blocked until the request is completed, times out or the connection to the engine is abnormally terminated. Thus, within each socket connection requests are handled synchronously.

The RPC protocol between the engine and the proxy consists of a handshake phase followed by a request/response phase. Each connection is initiated by the proxy and accepted by the engine.

If the engine status is READY the proxy 142 can send a request to be processed. In one embodiment, each request is handled synchronously, i.e., a new request cannot be issued until the previous request has completed.

Requests and responses are encoded as serialized Java objects using the standard Java object serialization mechanism.

In one embodiment, the GBP engine 136 is restarted whenever there is a configuration change or a policy change.

The GBP engine uses a DDC Read Interface 150 to load into memory all the DDC records required to perform its functions. A DDC data record summarizes the traffic observed between two network endpoints (e.g., a user and a server) for a specific network service over a given time period (e.g., one day). In order to produce results within an acceptable time period, in one embodiment, the engine caches its working set data and updates the cache periodically.

Policy management will be discussed next. In one embodiment, The GBP engine loads the current network security policy from the file system. The policy provides GBP engine 136 with information on already identified network assets, such as Critical Business Systems (CBSs), network services of interest, as well as, currently defined local groups.

Groups will be discussed next. When computing a set of groups to be used to classify users, GBP engine 136 takes into account both the user's membership in network directory groups and the user's membership in any local directory groups, such as those defined in policy. Anonymous users are automatically included in a pre-defined Anonymous group, while users that are not members of any directory group considered to be members of the *Other Groups* pre-defined goup.

In some embodiments of the network monitor shown in Fig. 2b, the GBP engine 136 interfaces to the Identity Acquisition Agent (IAA) 140 to determine the groups of which a user is a member. In some embodiments, users comprise both human users and computers acting as clients of networked resources. The GBP engine 136 requests the following information from the IAA 140:
1) For a given user, the groups of which that user is a member; the set returned by the IAA represents the transitive closure of the user's group membership, including both network directory groups and local directory groups; and
2) For a given group, the number of active users in that group.

In one embodiment, all Identity Acquisition is performed by the Identity Acquisition Manager (IAM) of IAA 140. The IAM computes the number of active users per user group, where an active user is defined as being one that has been authenticated in the last YY days. This information is provided to the Identity Acquisition Agent (IAA) 140 periodically. The number of active users in a group need not be updated more than once a week.

In one embodiment, the IAA access protocol is extended to allow the GBP engine 136 to query the IAA 140 for the current list of groups, their active user counts and their list of users.

In one embodiment, Anonymous Intranet users are segregated by IP address. An anonymous user whose IP address falls within the Intranet is identified by its computer's IP address. Thus, in the list of users that are clients of a service, anonymous Intranet users will be denoted by their IP addresses.

On the other hand, Anonymous users outside the Intranet are not uniquely identified.

An anonymous Internet user is given the name Internet whereas an anonymous Extranet user receives the name Extranet. Thus, all anonymous users outside the Intranet coalesce into a single Internet user and a single Extranet user. However, and optionally, anonymous users may be segregated by their IP addresses, i.e., anonymous Internet and Extranet users are treated identically to anonymous Intranet users.

When computing group membership, GBP engine 136 also takes into account and ignores any and all groups that have been dismissed through the GBP UI. The built-in groups Anonymous and Other Groups cannot be dismissed.

As noted above, users that are not members of a network directory group or a local directory group are considered to be members of the *Other Groups* pre-defined group. This may happen because the user is not a member of any valid group, or because all the groups of which a user is a member have been dismissed.

As noted above, a network monitor which analyzes network traffic in the manner described above gives the monitor user the ability to see groups of users and their behavior across a network. Still, given the quantity of data, it can be difficult to see the forest for the trees. What is needed is a way of displaying the data that gives the user to a reasonable description of network behavior and which allows the user to modify network behavior based on that description. The problem is, how do you present as dense a context around network behavior as possible so as to give a good picture of what is going on in the network.

One depiction of network activity is shown in Fig. 3. In this depiction, rows 302 through 309 illustrate groups of users while columns 320-326 illustrate critical business systems (CBSs). The intersection 330 of each row and column indicate the amount of network activity by that group of users to that CBS. In one embodiment, a bubble is displayed at each intersection to display, for instance, the number of users in the group that are accessing that CBS, or the number of accesses, etc.

The bubble table shown in Fig. 3 provides a field of data cross-matching group access behaviors into specific systems. This data is represented as bubbles as described below, but the table provides both a framework and the important context that allows the data to lead users into asking the right questions around constructing policy for their network.

Any shape could be used at the intersection ofeach row and column. In one embodiment, the bubble is used as a visual measure, providing low-fidelity quantitative information of network activity as filtered by monitor 108. Multiple bubbles give the user a quick comparison of a large related data set and steer the questions in their investigation of identity policy.

In one embodiment, the bubble is a simple circle. The size of the bubble is determined by the amount of bandwidth it represents. The shade of the bubble is determined by whether or not there are outliers within that bubble's data. In one such embodiment, the bubble comes in seven sizes.

In one embodiment, bubble details are presented in the form of a tooltip, consistent in display with other tool-tips displayed by monitor 108. In one embodiment, bubble details provide the amount of bandwidth shown, the number of users involved, and whether or not there are outliers to investigate.

In one embodiment, the bubble graph can be constrained by service using, for instance, a pull-down menu 352 (as shown in Fig. 3). In one such embodiment, pull-down menu 352 only shows services that were active during the time being queried.

In one embodiment, pull-down menu 352 displays service as defined in policy. If a service is only covered by the highest-level definitions ("Tcp," "Udp," "IP") then they may be further broken down by common IANA services. For example, if TCP/1521 is not defined in policy, then it would be reported as the generic "Tcp" service within this widget unless it also relates to a common IANA service.

In one embodiment, clicking on the user group brings up a box 340 with information regarding the services the user group is accessing. In the embodiment shown, the number of users accessing a particular service is graphically displayed by increasing or decreasing the size of the bubble 360 for that service. In one such embodiment, the visual representation of bad behavior is scaled to the equivalent range of the visual representation of good events such that good events don't swamp bad events. In one embodiment, the color of the bubble is used to indicate whether the behavior is potentially good or bad. In one such embodiment, a lighter colored bubble indicates potential bad behavior, while a darker bubble indicates expected behavior. Such an approach makes bad behavior obvious.

In addition to color, in one embodiment the bubble is moved along a continuum line 362 used to indicate if the behavior displaced is expected or unexpected. Unexpected behavior is noted by color and by the designation "Investigate" at the end of the row. (See, e.g., the Secure Shell access by users in the Auditing Contractors group to the Finance Servers, a potentially bad behavior for users outside the Finance Department.)

In one embodiment, you can drill down into each bubble to see the events. In one embodiment, events associated with the users' interaction with the CBS are displayed in order of criticality when the bubble is clicked. In one embodiment, one can drill down into the services to see the events, or drill down into the bubble to see events associated with groups of users.

In one embodiment, the standard bubble graph view is configured by the user to select the CBSs and Groups that should be displayed (or ignored). In one such embodiment, this view is unique to each of the system's users. In another embodiment, columns and rows can be dragged and dropped to their intended position so no other configuration process is needed.

In one embodiment, a simple mechanism is included for removing groups from consideration on all discovery data displays. In one such embodiment, this is done by dismissing a group from the bubble graph and/or the CBS view.

In one embodiment CBSs are displayed left to right in decreasing order of bandwidth occupied.

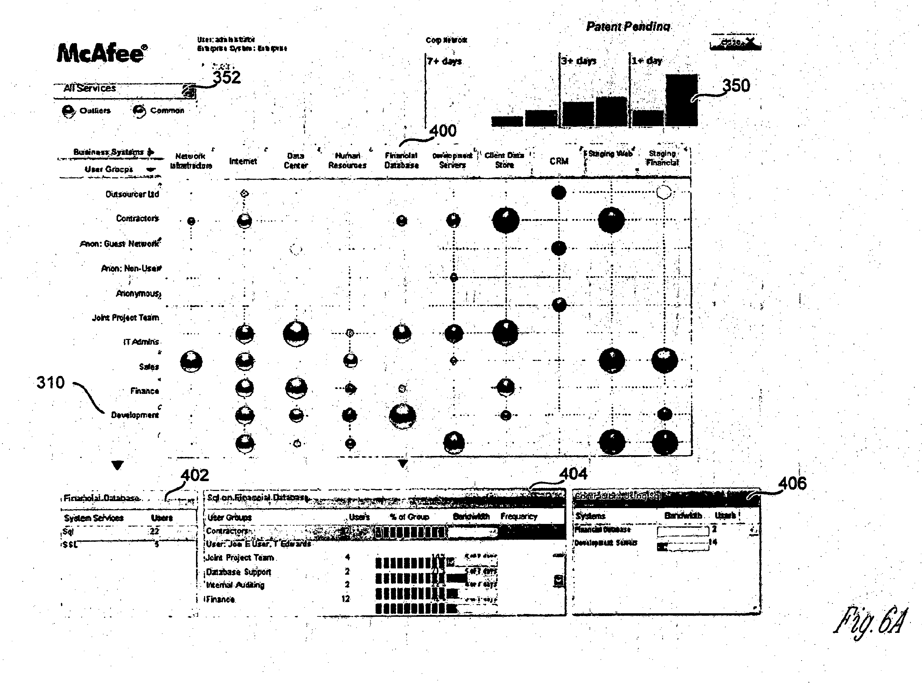

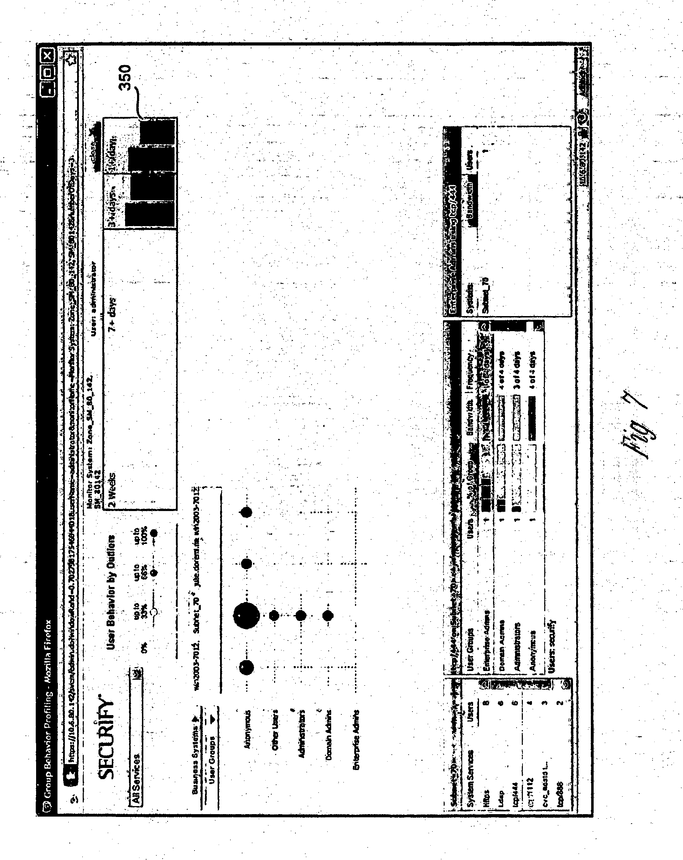

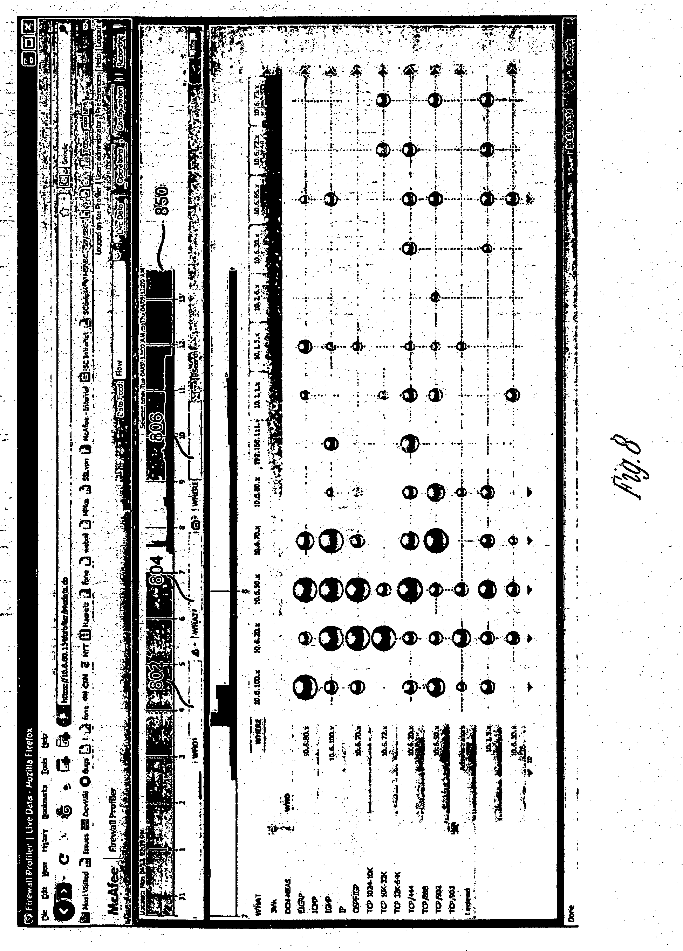

In one embodiment, the application makes a clear distinction between the activities common to most of a group's users of a specific service on a specific system, who can be considered "mainstream" in their behavior, versus the members of a group whose use of a service on a system greatly differs from their peers, who can be considered "outliers" in their behavior. In one such embodiment, as is shown in Fig. 6a, mainstream and outlier groups are shown in different colors. If a group is both an outlier and mainstream (for different services, that is) it is displayed in both colors (e.g., as concentric circles). Alternately, bubble shading across a distinct and obvious-continuum as shown in Figs 7 and 8 can be used to denote the number of users involved in the interaction between ,group and system.

In the embodiment shown in Fig. 3, it is possible to monitor network behavior across particular time intervals based on activity that day, the last day, the last three days, the last seven days or the last two weeks, in addition to free-form time frame selection. A method of selecting the time period to be analyzed is shown in Fig. 3, where each day is shown in the timeline 350 at the top of the page. Selecting within the segment showing the previous week, automatically causes monitor 108 to analyze based on the last two weeks. Selecting within the segment showing days 4-7 automatically causes monitor 108 to analyze based on the last week. Selecting within the segment showing days 2 and 3 automatically causes monitor 108 to analyze based on the three days. Finally selecting day 1 automatically causes monitor 108 to analyze based on the last day.

In one embodiment, a network traffic indicator for each day indicates the amount of traffic saved by monitor 108. The traffic indicator can be used by the user to choose an analysis based on the amount ofdata available for the given period.

In one embodiment, all-selections in timeline 350 are from current hour into the past. Selection grows to the left and shrinks to the right. Clicking in an unselected time frame makes it the current selection. When the selection is changed, monitor 108 triggers a query, refreshing page data. In one such embodiment, clicking current selection refreshes data if last-queried data is more than one hour older than current time.

In one embodiment, a data refresh is triggered when the current hour moves past the last hour.

In one embodiment, when a new timeframe query is made, controller 108 waits for three seconds before sending the query. This is an expensive query. If a new timeframe query comes from the same user before the last one returns - such as when the user accidentally made the wrong selection -- cancel the first query and start the new one.

In the embodiment shown in Figs. 3-5, the system defaults to displaying all services in all CBSs. By selecting pull-down menu 352, one can select one service to be analyzed across the CBSs, or a subset of services.

In one embodiment, a three-dimensional grid is used to display network activity. In one such embodiment, this involves: ,
creating a grid having a first, second and third axis;
assigning client groups to the first axis;
assigning critical business systems to the second axis;
assigning services to a third axis;
monitoring network traffic;
displaying network traffic on the grid as a function of client group, service and critical business system, wherein displaying includes associating a point on the first axis with each client group, associating a point on the second axis with each critical business system, associating a point on the third axis with each service and displaying a shape at intersections in the grid between points on the first, second and third axes, wherein the shape varies in size as a function of netwofk traffic associated with a particular client group and a particular critical business system.

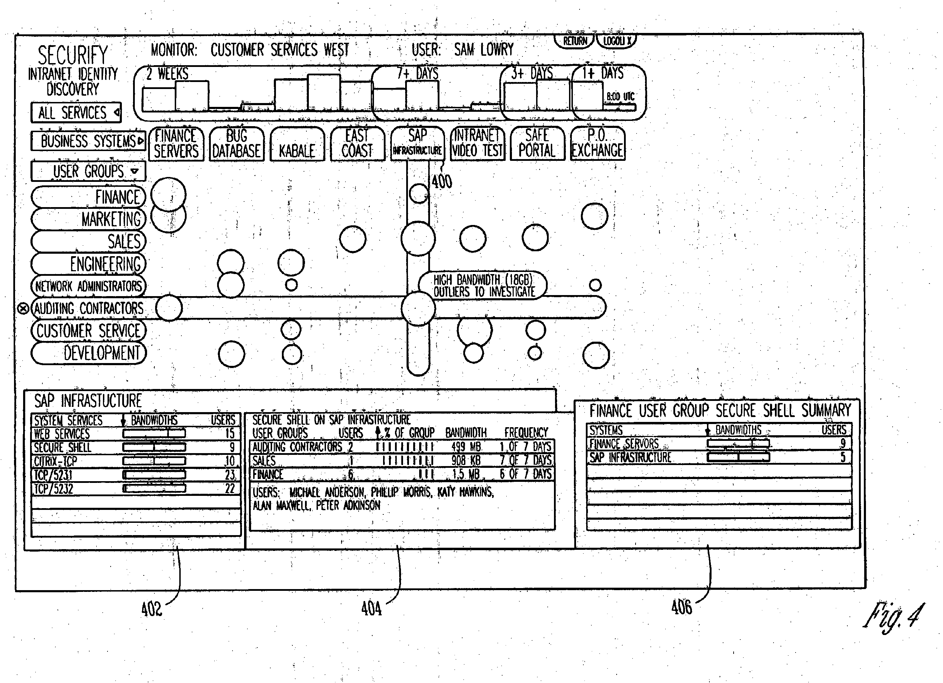

In one embodiment, as is shown in Figs. 3-5, columns have tabbed headers 400 indicating the CBS. In one such embodiment, you can click on the tabbed header 400 to see in real-time the services being provided by that CBS, offering a rich context for a network behavior and its related events within a single page-view. Such an embodiment is shown in Fig. 4.

As can be seen in Fig. 4, in one embodiment, clicking on a column header causes a box 402 to open below the last row. The box 402 includes information as to the services offered by the CBS. By clicking on a system service in box 402, one can determine the user groups accessing that particular service on the CBS (window 404). By clicking on a particular user group in box 402, a window 406 opens listing access by that user group to all the CBSs in system 100.

This display and drill-down methodology provides a mechanism for organizing and tracking services and users in computer system 100.

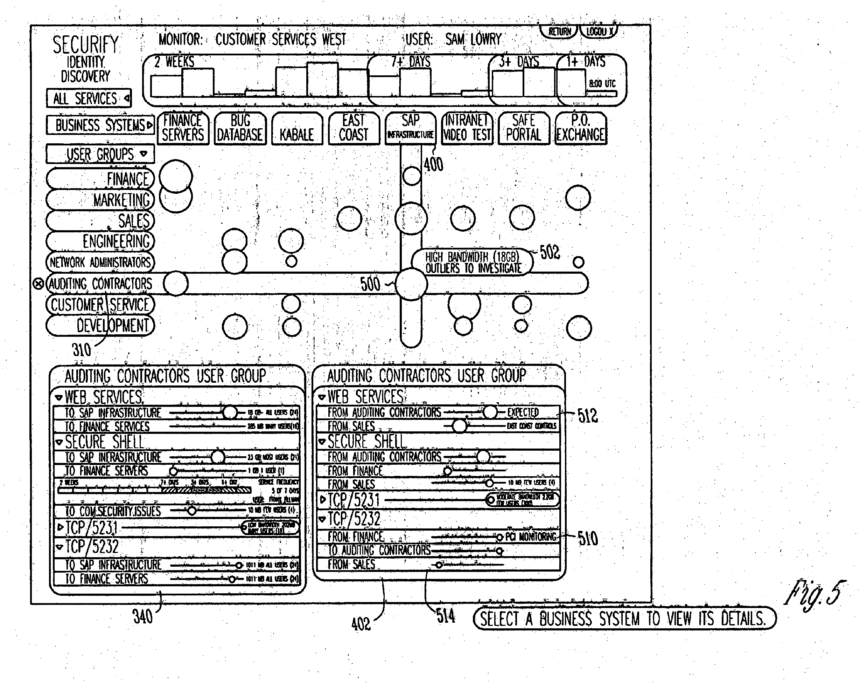

In the embodiment shown in Fig. 5, selecting a column header 400 and a row header 310 results in highlighting both the row and the column, and the display of network transfer bandwidth 502 associated with the intersection 500. In one embodiment, such a selection results in the display of both box 340 and box 402. In one such embodiment, selection of an item within either box 340 or box 402 results in a drill down into the item selected. For example, selection of Secure Shell service access by the Auditing Contractors Group results in the -display of information such as service frequency by particular users in the group.

Also shown on Fig. 5, are policy controls 510 and 512. Policy control 510 (labeled "PCI Monitoring") indicates that this particular service for this particular group falls with the PCI Monitoring policy. Selection of control 510 takes the user to another screen that displays the policy. Similarly, policy control 512 (labeled "East Coast Controls") indicates that this particular service for this particular group is covered by the East Coast Control policy. Selection of control 512 takes the user to another screen that displays the East Coast Control policy.

Also shown on Fig, 5, is a control 514 for establishing a threshold level for identifying outliers user groups. In the embodiment shown, control 514 is a line extending across an outlier threshold line for user groups associated with that service. Selection of control 514 allows one to dynamically adjust the outlier threshold by dragging the line right or left.

Once you can display network behavior, it becomes possible to verify traffic against role-based controls and pre-built security best practices. Automated discovery capability helps uncover the "who, what, and where" during the planning phase of change projects, without requiring any rule definition. Fig. 6a illustrates the results of a discovery session conducted on a network using network monitor 108. Once again, Fig. 6a illustrates the pull-down menu 352 and the timeline 350, and the column and row structure used to show user access to services on CBSs.

In the approach shown in Fig. 6a, common or mainstream, user groups are shown as lighter colored bubbles, while outlier user groups are shown as darker bubbles. This makes is much simpler to distinguish between groups.

In one embodiment, network monitor 108 includes a verification capability. In some such embodiments, this verification capability builds on the discovery view. In one embodiment, verification automatically verifies traffic against role-based controls and pre-built security best practices. This verification process can instantly pinpoint and provide real-time alerts on the following representative examples:
1) Access by non-authenticating users, such as terminated employees who have had their access privileges revoked
2) Network access exceptions such as file servers, disallowed network applications, and geographically dispersed printers that are not behaving as expected
3) Verifying access of users that should be on the network, such as reassigned employees or outsourcers who inappropriately, perhaps inadvertently, access systems they shouldn't
4) Unsecured or malicious activities, including tunnelling of services like FTP inside of HTTP to transit firewalls
5) Verifying expected usage of administrative protocols or commands, such as web authoring.

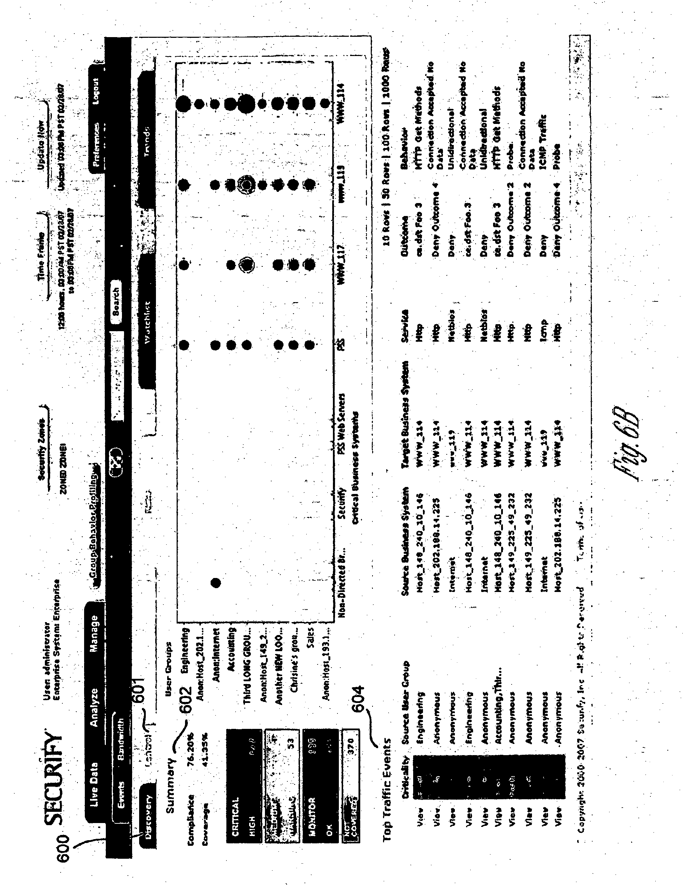

The results are shown in a display such as is shown in Fig. 6b, where color ranges from red through yellow to green as a function of the severity of potential problems, if any. In the embodiment shown in Fig. 6b, the summary box 602 shows compliance with policy to be approximately 76.2% for the traffic surveyed. The top ten events are shown at the bottom of the screen (in section 604), sorted in order of criticality.

In one embodiment, one can easily switch between discovery and verification modes by selecting discovery tab 600 (for data discovery) or control tab 601 (for policy verification).

Fig. 7 illustrates discovery on a computer system with slightly more than four days of discovery data.

The above system can be extended beyond network traffic to discover and control firewalls. Fig. 8 illustrates traffic as a function of users (rows) and destinations (columns), with the "What" list listing the services offered across all the relevant critical business systems. Once again, the bubble color is used to indicate information relative to the intersection of the row and column. In the example shown, the bubble indicates the amount of traffic to that CBS and the color indicates whether the traffic is allowed or denied.

The timeline 850 in Fig. 8 illustrates a different way of displaying the amount and duration of network traffic. Drop down menus 802, 804 and 806 allow the user to select whether to display a single group, a single service or a single CBS, respectively.

### User Discovery

In a directory-based system such as Active Directory, a user can exist in a number of different groups. She may be a member of the Finance Group, the Executive Staff, Employees and Headquarters. In the past, systems that wanted to display network activity as a function of user behavior either had to list all users or all groups or were constrained to selected users or groups of users preselected-by the network administrator. Each group-based approach had the limitation that actions of individual users distributed across multiple groups would be duplicated across each of the user's groups, overemphasizing the effect of that user. What is needed is a system and method for automatically assigning users to groups in a way that accurately reflects the actions of each group and that makes it easy to write security policies that cover each user. In one embodiment, given the set of users accessing a particular service on a particular server, we determine the best way to group the users.

In one embodiment, the GBP engine 136 uses one or more of the following algorithms during discovery to determine which groups best represent the clients of a CBS or a CBS-service pair: 1) a group representation algorithm, 2) a client representation algorithm and 3) a group ranking algorithm. In one embodiment, the algorithm to be used is selected by the user.

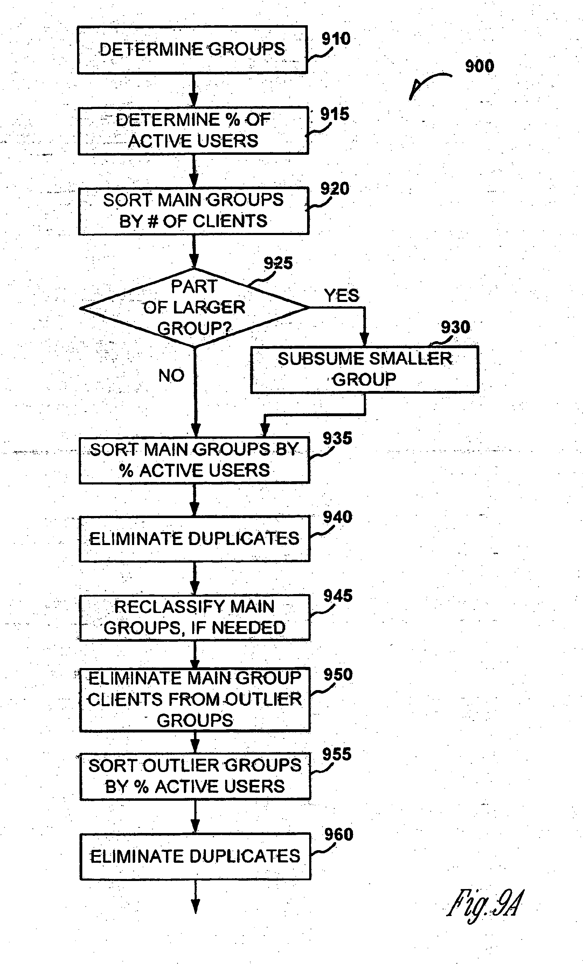

The Group Representation Algorithm is shown in Fig. 9a and is as follows:
Given a target system -CBS or group of CBSs, service or group of services, or a combination of the two - and a set of clients for that target system, compute usage "by group representation" for that target as follows:
   1) Compute (at 910) the set of all the groups of which the clients (users or computers) are members using the group information retrieved from the IAA 140, as noted above.
   2) For each group, determine (at 915) the ratio of clients that are members of the group to the total number of active users of the group; this is termed the percentage of active users.
   3) Segregate the groups into two sets: mainstream and outlier. Mainstream Groups are those whose percentage of active users is at or above a certain threshold value. The threshold value is configurable and varies depending on the total number of active users in the group. In one embodiment, the default set of threshold values is 50% for groups under 10 active users, 40% for groups between 11 and 100 active users, 30% for groups between 101 and 1000 active users, and 25% for groups larger than 1000 active users. Outlier Groups are those whose percentage of active users falls below this threshold.
   4) Within the mainstream groups, sort (at 920) the groups in increasing order of clients.
   5) Within the mainstream groups find (at 925) any and all groups whose entire set of clients is contained by another (larger) mainstream group; subsume (at 930) the smaller mainstream group into the larger mainstream group.
   6) Sort (at 935) the mainstream groups in descending order of percentage of active users;
   7) In the mainstream groups, assign (at 940) each client to one and only one group, giving priority to the groups with the highest percentage of active users, i.e., groups higher in the sorted list;
   8) After this step is performed, any mainstream group that falls below the threshold of active users is moved (at 945) to the outliers group.
   9) Remove from the outlier groups (at 950) all clients that have been accounted for (i.e., are members of) any of the mainstream groups.
   10) Sort the outlier groups (at 955) in descending order of percentage of active users.
   11) Assign (at 960) each client to one and only one outlier group, giving priority to the groups with the highest percentage of active users, i.e., groups higher in the sorted list.

The result is a set of user groups for each particular target. The assignment of clients to user groups is a function of target and may change as monitor 108 filters network traffic by target.

The following example illustrates the Group Representation-Algorithm:
Discovery Data indicates that a Web Server has 15 distinct clients as follows:
   a) 8 clients are members of the Quality Assurance, Engineering and Corporate Employees groups;
   b) 2 clients are members of the Engineering and Corporate Employees group;
   c) 5 clients are members of the Corporate Employees group.

The composition of these groups is as follows:
a) The Quality Assurance group has 8 active users;
b) The Engineering group has 20 active users;
c) The Corporate employees group has 100 active users.

Thus, the percentage of active users for each group is:
a) Quality Assurance: 8 out of 8 = 100%
b) Engineering: 10 out of 20 = 50%
c) Corporate Employees: 15 out of 100 = 15% Both the Quality Assurance and the Engineering groups are mainstream groups while the Corporate Employees group is an outlier. However, because all members of the Quality Assurance group are also members of the Engineering group, the former is subsumed by the latter. Thus, after applying the algorithm noted above, Web Server's clients are assigned to groups as follows:
   a) 10 clients are assigned to the Engineering group which is designated a mainstream group;
   b) 5 clients are assigned to the Corporate Employees group which is designated an outlier group.

The Client Representation Algorithm will be described next. This algorithm presents different sets of groups that best represent the client set based on different aggregation levels. An aggregation level denotes the ratio of clients that are members of that group to the total number of clients. In one embodiment, three levels are defined:
- 1 -groups that represent 33% or less of the clients;
- 2 - groups that represent between 34% and 66% of the clients;
- 3- groups that represent between 67% and 100% of the clients;

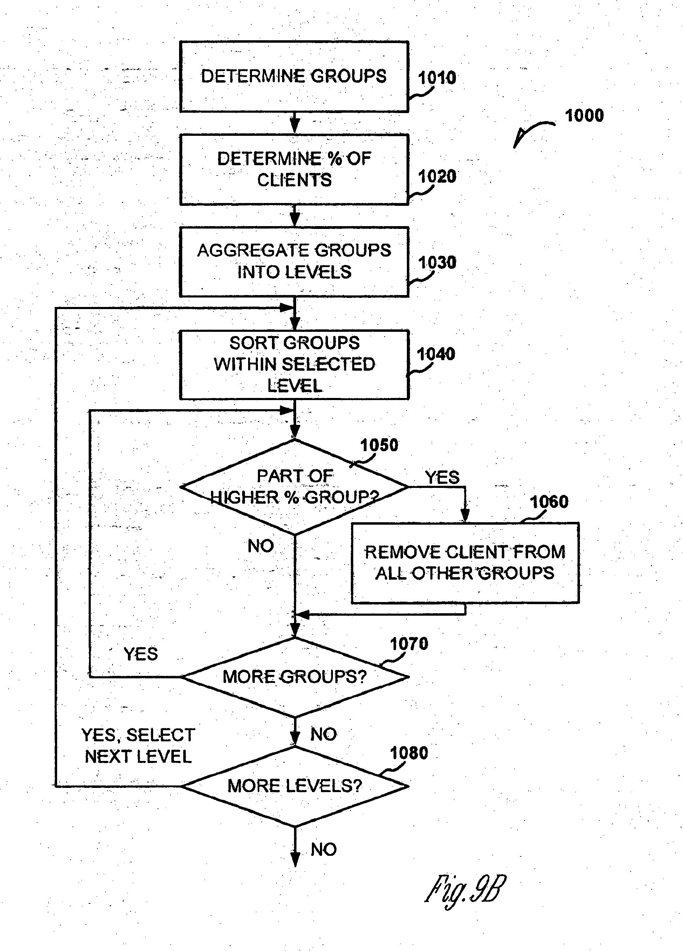

The algorithm is shown in Fig. 9b and is as follows:
1) Compute (at 1010) the set of all the groups of which the clients(users or computers) are members using the group information retrieved from the IAA 140, as noted above.
2) For each group, determine (at 1020) the ratio of clients that are members of the group to the total number of clients; this is termed the percentage of clients. Map this value into an aggregation level.
3) Aggregate (at 1030) all the groups into aggregation levels and select an aggregation level as the selected aggregation level.
4) Sort (at 1040) the selected groups in decreasing order of percentage of clients.
5) Within the selected group, assign each client to one and only one group, giving priority (at 1050) to the groups with the highest percentage of clients; if a selected group's aggregation level falls below the selected aggregation level, move it back to the remaining set of groups.
6) Remove (at 1060) all the clients assigned to the selected groups from the remaining groups.
7) Repeat (at 1070) previous 3 steps until there aren't any groups whose aggregation level matches the selected aggregation level.
8) At 1080, increase the aggregation level by one, making it the selected aggregation level, and repeat the procedure starting at step 3. Once the aggregation level has reached its highest value (3), decrease it by one at every iteration until the lowest aggregation level (1) has been reached or the set of groups remaining to be processed is empty.

After applying the above algorithm, any groups whose percentage of clients falls outside the selected aggregation level are considered outliers.

The following example illustrates the Client Representation Algorithm:
discovery Data indicates that a Web Server has 15 distinct clients as follows:
   a) 8 clients are members of the Quality Assurance, Engineering and Corporate Employees groups;
   b) 2 clients are members of the Engineering and Corporate Employees group;
   c) 5 clients are members of the Corporate Employees group.

The percentage of clients for each group is:
a) Quality Assurance: 8 out of 15 = 53% (aggregation level 2)
b) Engineering: 10 out of 15 = 66% (aggregation level 2)
c) Corporate Employees: 15 out of 15 = 100% (aggregation level 3)

If the selected aggregation level is 1 (0-33%), none of the groups fall under this aggregation level, therefore, all groups are designated outliers. The assignment of clients to groups proceeds as under aggregation level 2 below. If the selected aggregation level is 2 (34-66%), both Quality Assurance and Engineering fall under this aggregation level. Engineering represents a higher percentage of clients and is picked to represent 10 out of the 15 total number of clients. Quality Assurance is left with 0 (zero) clients and Corporate Employees accounts for the remaining 5 clients which represent 33% of the total clients (aggregation level 1). The algorithm attempts to select groups with next higher aggregation level (3) and, failing to find any, reduces the aggregation level first to 2 and then to 1 where Corporate Employees is selected as representative of the remaining 5 clients. Engineering is designated a mainstream group and Corporate Employees is designated an outlier.

If the selected aggregation level is 3 (67-100%), only Corporate Employees falls under this aggregation level. Since it accounts for 100% of the clients it is designated a mainstream group and no groups are designated outliers.

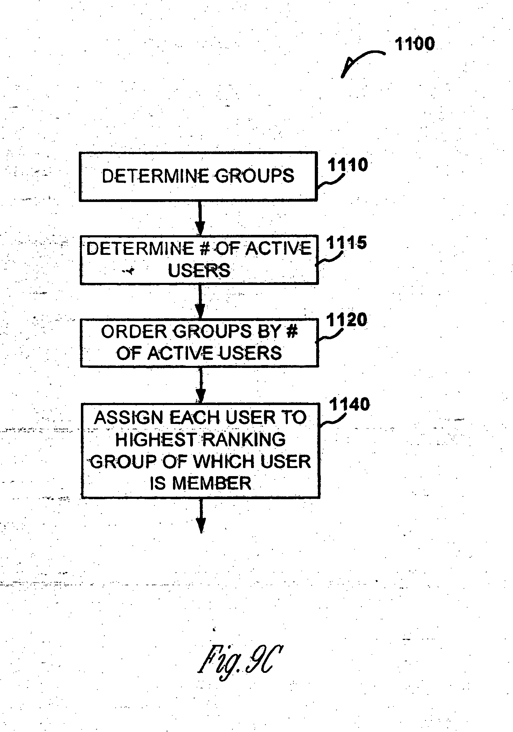

A Group Ranking Algorithm (1100) will be discussed net. As can be seen in Fig. 9c,
1) Compute (at 1110) the set of all the groups of which the clients (users or computers) are members using the group information retrieved from the IAA 140, as noted above.
2) For each group, retrieve from the IAA (at 1115) the count of group members that are active users.
3) Order (at 1120) the groups by increasing number of active users such that a group with a small number of active users ranks higher than a group with a larger number of active users.
4) Assign each user to the highest ranked group of which he is a member.

The following example illustrates the Group Ranking Algorithm:
Discovery Data indicates that a Web Server has 15 distinct clients who are members of 3 different groups whose composition is as follows:
   a) The Quality Assurance group has 8 active users;
   b) The Engineering group has 20 active users;
   c) The Corporate Employees group has 100 active users.

Thus, ordering the groups by increasing number of active users yields:
1. Quality Assurance (8)
2. Engineering (20)
3. Corporate Employees (100)

As a result, any client who is a member of Quality Assurance will be assigned to the Quality Assurance group regardless of any other group membership. Likewise, any client who is a member of Engineering (but not Quality Assurance) is assigned to the Engineering group. All other clients are assigned to the Corporate Employees group.

### Asset Discovery

In one embodiment, the GBP engine 136 uses an asset discovery algorithm during discovery to determine which CBSs to include in the list of Critical Business Systems.

In one embodiment of the invention, CBS discovery is automated from the DDC information, as follows.

At 1210, network traffic is reviewed for potential critical assets.

At 1220, the number of events for each asset found is compared to the number of events of all assets found to determine if the asset is a critical asset. If not, control moves to 1260.

If, at 1220, the number of events for each asset found indicates that the asset is a critical asset, control moves to 1230. At 1230, the number of packets for each asset found is compared to the number of packets of all assets found to determine if the asset is a critical asset. If not, control moves to 1260.

If, at 1230, the number of packets for each asset found indicates that the asset is a critical asset, control moves to 1240 and the asset is designated a critical asset (or Critical Business System (CBS)). In one embodiment, an asset is a critical asset if the events per asset of this asset places the asset in the top P1 percentile of all the assets found and if the packets per asset of this asset places the asset in the top P2 percentile of all the assets found. In one such embodiment, P1 and P2 equal 90%. Control then moves to 1250 and the process is repeated until all assets found have been reviewed.

At 1260, the number of users accessing each asset is compared to the number of users accessing each of the other assets found to determine if the asset is a critical asset. If not, control moves to 1250.

If, at 1260, the number of users accessing each asset found indicates that the asset is a critical asset, control moves to 1270. At 1270, the number of packets for each asset found is compared to the number of packets of all assets found to determine if the asset is a critical asset. If not, control moves to 1260. Note: this test may use different parameters than the test at 1230.

If, at 1270, the number of packets for each asset found indicates that the asset is a critical asset, control moves to 1240 and the asset is designated a critical asset (or Critical Business System (CBS)). In one embodiment, an asset is a critical asset if the users per asset of this asset places the asset in the top P3 percentile of all the assets found and if the packets per asset of this asset places the asset in the top P4 percentile of all the assets found. In one such embodiment; P3 and P4 equal 75%. Control then moves to 1250 and the process is repeated until all assets found have been reviewed.

In one embodiment, for each DDC data-set, the monitor 108 computes histograms for the number of events, the number of packets, and the number of clients. For example, one histogram lists how many hosts have 1-100 events, how many 100-200 events, and so on. For purposes of CBS discovery, these numbers are summed over all the services accessing the CBS.

from the histogram data, a percentile may be computed by dividing the domain of the data into 100 parts.

From this histogram data, CBS's are assigned as follows:
Hosts above a fixed percentile of events AND of packets (set intersection) are considered to be CBS's. In one embodiment, this fixed percentile is 90 percent.

Hosts with at least a fixed percentile of number of users, also having a second fixed percentile of packets are considered to be CBS's. In one embodiment, the fixed percentile and second fixed percentile are both 75 percent.

In one embodiment of the invention, this algorithm is applied to subsequent DDC data sets, and newly discovered CBS's are merged in with those discovered in previous applications of the algorithm.

In one embodiment of the invention, the monitor 108 ignores DDC data sets unless minimum number of events, packets and users appear in the data.

In one embodiment of the invention, the monitor 108 ignores DDC data sets until a fixed time interval has passed after system startup.

In one embodiment of the invention, the monitor 108 maintains a list of hosts that are excluded from consideration as CBS's, such as hosts that are members of a DHCP pool.

In one embodiment of the invention, the monitor 108 additionally requires that a CBS be derived from a DDC data set more than a minimum number of times, such as 2, in an interval of time, such as one day, or it is excluded from consideration.

In one embodiment of the invention, the monitor 108 removes CBS's from its list of previously discovered CBS's if they fail to be identified as CBS's more than a minimum number of times per day, such as 3.

In one embodiment of the invention, CBS discovery is performed based on a template of services. The template are created by the network administrator. Each template indicates a list of services and the kind of CBS that corresponds to this list. For example, a Microsoft Exchange Server might include the services: SMB, SMTP, POP, IMAP, RPC. For each host in each DDC data set, the monitor 108 computes the total services exported by that host, and compares this to each template. Hosts that match are considered to be CBS's.

### Discovery for Policy Development

In one embodiment, assigning users to groups that best represent them using the Group Representation Algorithm, the Client Representation Algorithm or the Group Ranking Algorithm allows a network administrator to determine how the resources of the network's critical business systems are being used and tailor policy controls that enable appropriate use while preventing undesirable access behavior, as in a network monitoring system or a firewall.

This process of policy definition and refinement is greatly enhanced and simplified by the application's ability to automatically segregate users into mainstream groups and outlier groups. In one embodiment, the network administrator automatically creates policy controls that enable mainstream groups to access the network resources. Clients that belong to outlier groups are scrutinized and, if deemed to be legitimate users of the resource, the outlier groupe is sub-divided to include just the set of users that are authorized.

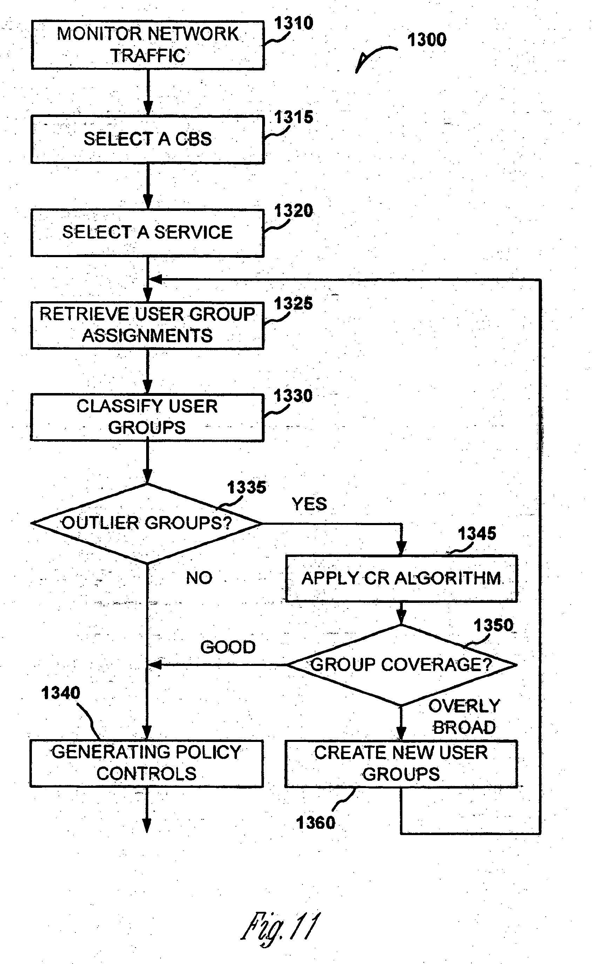

In one embodiment, as is shown in Fig. 11, the policy refinement workflow, using the GBP UI, is thus:
1. Select a timeframe for traffic analysis; this timeframe should be sufficiently long to allow for the collection of a representative sample of traffic, such as one week. Then monitor (at 1310) network traffic for the selected timeframe.
2. Select, at 1315, a CBS for which additional policy controls are desirable; this selection may be based on amount of traffic to that CBS or the number of users that are clients of the CBS, or it may be determined by the relative importance of the CBS.
3. Select, at 1320, a service offered by the CBS and review, at 1325. the group assignments presented by the application using the Group Representation Algorithm, classify, at 1330, each user group as either mainstream or outlier:
   a. If, at 1335, a very small number of mainstream groups are presented and there are no outlier groups, automatically create policy controls at 1340 for the mainstream groups.
   b. If, at 1335, there is a mix of mainstream and outlier groups presented, use the Client Representation Algorithm at 1345 to determine at 1350 if there is a group, or small number of groups, that comprises the entire client set without any one group being overly broad (e.g., if the only available user group that contains both user groups "Finance" and "Marketing" was the user group "Employees," that could potentially be overly broad. Cross-check access by this group to the same or similar services against other CBSs to further substantiate the presumed access rights. If such a group (or groups) is found, create the corresponding policy controls at 1340.
   c. If the Client Representation Algorithm does not yield a strong set of candidate groups, or the groups presented by the Group representation Algorithm are all outliers, create at 1360 one or more new groups that are a better fit to the client set and recompute the assignment of clients to groups at 1325 using the new groups.

The identity-aware network monitoring system and method described above helps lower cost and enable faster and broader deployment of visibility into "who is doing what and where" across applications and networks.

Ultimately, the systems and methods described above help increase efficiency and compliance by:
Replacing time-intensive manual discovery surveys
Simplifying the process of defining identity-based controls
Dispensing with the inaccurate manual verification of logs
Decreasing investigation time for access violations with correlated data
Reducing disruption of erroneous infrastructure and access changes
Monitor and control access to network resources without application recoding

At the same time, the systems and methods described above help reduce risk by:
Detecting inappropriate user behavior after network authentication and authorization
Eliminating the bypassing of security gateways and access controls
Compensating control for unprotected custom applications
Detecting abuses from deprovisioned users and users assigned to new roles
Monitoring the use of privileged accounts.

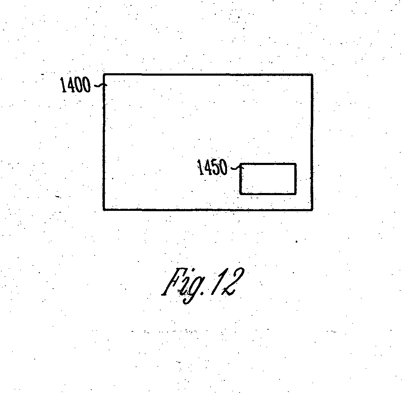

FIG. 12 is a schematic diagram illustrating a medium having an instruction set that results in an identity-aware network monitoring system and method according to an example embodiment. A machine-readable medium 1400 includes any type of storage medium such as a disk drive or a solid state memory device, or the like. A machine-readable medium 1400 includes instructions within an instruction set 1450. The instruction set 1450, when executed by a machine such as an information handling system or a processor, cause the machine to perform operations such as displaying identity-based network behavior and controlling access to and behavior of networks as a function of observed identity-based network behavior.

In an example embodiment of a machine-readable medium 1400 that includes the instruction set 1450, the instructions, when executed by a machine, cause the machine to perform operations such as automatic grouping of users in groups and automatic discovery of network assets and network policy.

Thus, methods and a machine-readable medium including instructions for displaying and controlling network behavior based on identity have been described. Although the various methods for electing a displaying and controlling network behavior based on identity have been described with reference to specific example embodiments, it will be evident that various modifications and changes may be made to these embodiments without departing from the broader embodiment of the disclosed subject matter. Accordingly, the specification and drawings are to be regarded in an illustrative rather than a restrictive sense.

Although specific embodiments have been illustrated and described herein, it will be appreciated by those of ordinary skill in the art that any arrangement that achieve the same purpose, structure, or function may be substituted for the specific embodiments shown. This application is intended to cover any adaptations or variations of the example embodiments of the invention described herein. It is intended that this invention be limited only by the claims; and the full scope of equivalents thereof.

## Claims

1. A method of discovering network entities in a network having a plurality of network entities, including network users and network assets, comprising:
monitoring and storing network traffic, wherein monitoring includes finding network entities in the network traffic;
if the network entities are network assets, determining if the network entities are critical network assets, wherein determining includes applying an asset discovery algorithm to automatically identify critical network assets by comparing the number of events for the network entity with the number of events for all assets;
if the network entities are network users, classifying the network users automatically into user groups, wherein classifying the network users into user groups automatically comprises
assigning network users to user groups, wherein assigning network users to user groups includes assigning one or more network users to multiple user groups;
sorting the groups, wherein sorting the groups includes sorting network users into mainstream groups and outlier groups, wherein the mainstream groups comprise groups whose percentage of active network users is above a threshold and outlier groups comprise groups whose percentage of active network users is below the threshold; and
processing the groups so that each network user is a member of a single group; and
displaying the network traffic as a function of the critical network assets and the user groups.

2. The method of claim 1, wherein sorting the groups includes applying a client representation algorithm to the groups, wherein the client representation algorithm presents different set of groups that represent a network user set based on different aggregation levels, wherein the agregation level of a group is dependent on the ratio of network users that are members of that group to the total number of network users.

3. The method of claim 1, wherein sorting the groups includes:
determining, for each group, a percentage of active network users (915);
sorting the groups in descending order of percentage of active network users (920); and
assigning each network user to a single group, giving priority to the groups with the highest percentage of active network users (940).

4. The method of claim 1, wherein determining if the network entities are critical network assets includes:
determining, for each of the network assets, events, packets and users per network asset (1210);
for each network asset found in the network traffic, if the events per asset of the asset are greater than the events per asset of a first percentile of all assets found in the network traffic and if the packets per asset of the asset are greater than the packets per asset of a second percentile of all assets found in the network traffic, designating said asset as a critical asset (1220); and
for each network asset found in the network traffic, if the users per asset of the asset are greater than the users per asset of a third percentile of all assets found in the network traffic and if the packets per asset of the asset are greater than the packets per asset of a fourth percentile of all assets found in the network traffic, designating said asset as a critical asset (1230).

5. A computer readable medium carrying computer readable instructions for controlling a computer to carry out the method of any preceding claim.

6. A network monitor (108) adapted for use in a network having a plurality of network entities, including network users and network assets, comprising:
a data collector (131), wherein the data collector is adapted to capture information indicative of network traffic; and
a data analyzer (135) connected to the data collector, wherein the data analyzer is adapted to decode and analyze the information captured by the data collector;
a processor connected to the data analyzer, wherein the processor is adapted to find network entities in the network traffic and automatically classify the network entities that are found, wherein:
if the network entities are network assets, the processor is adapted to determine if the network entities are critical network assets, wherein determining includes applying an asset discovery algorithm to automatically identify critical network assets by comparing the number of events for the network entity with the number of events for all assets;
and
if the network entities are network users, the processor is adapted to classify the network users automatically into user groups by assigning network users to user groups, wherein assigning network users to user groups includes
assigning one or more network users to multiple user groups; sorting the groups, wherein sorting the groups includes sorting network users into mainstream groups and outlier groups, wherein the mainstream groups comprise groups whose percentage of active network users is above a threshold and outlier groups comprise groups whose percentage of active network users is below the threshold; and
processing the groups so that each network user is a member of a single group; and
a user interface (146) connected to the processor, wherein the user interface is adapted to display the network traffic as a function of the critical network assets and the user groups.

7. The network monitor of claim 6, wherein the processor is adapted to sort the groups by:
determining, for each group, a percentage of active network users;
identifying mainstream groups, wherein mainstream groups are client groups with percentages of active network users above a pre-defined threshold;
eliminating mainstream groups whose network users are all members of a larger mainstream group; and
sorting the remaining mainstream groups in descending order of percentage of active network users; and
wherein processing the groups so that each network user is a member of a single group includes:
assigning each network user in one or more mainstream groups to a single mainstream group, giving priority to the mainstream groups with the highest percentage of active network users;
determining if any of the client groups have a percentage of active network users below the pre-defined threshold;
if any of the client groups have a percentage of active network users below the pre-defined threshold, reclassifying those client groups as outlier groups;
removing from the outlier groups all network users that are members of one of the remaining mainstream groups;
sorting the outlier groups in descending order of percentage of active network users; and
assigning each network user in one or more outlier groups to a single outlier group, giving priority to the outlier groups with the highest percentage of active network users.

8. The network monitor of claim 6, wherein the processor is adapted to sort the groups by:
calculating, for each group, the ratio of network users that are members of the group to the total number of network users;
mapping each group to an aggregation level as a function of the ratio calculated for each group;
selecting and processing a selected aggregation level, wherein selecting and processing includes:
a) selecting all the groups whose aggregation level is the same as the selected aggregation level;
b) sorting the selected groups in decreasing order of percentage of network users ;
c) within the selected groups in the selected aggregation level, assign each network user to one and only one group, giving priority to the groups with the highest percentage of network users;
d) if the aggregation level of a group within the selected group falls below the selected aggregation level after network users are removed, mapping the group to its appropriate aggregation level.
e) removing all the network users assigned to the selected groups in the selected aggregation level from the remaining groups; and
f) selecting and processing another aggregation level until each network user is assigned to only one group.

9. The network monitor of claim 8, wherein selecting and processing another aggregation level includes;
determining if the highest level aggregation level has been selected and processed;
if the highest level aggregation level has not been selected and processed, determining if the most recent aggregation level selected is the highest level aggregation level;
if the highest level aggregation level has not been selected and processed and if the most recent aggregation level selected is not the highest level aggregation level, selecting and processing the aggregation level that is one higher than the most recent aggregation level as the selected aggregation level, selecting all the groups whose aggregation level is the same as the selected aggregation level and repeating a-f; and
if the highest level aggregation level has been selected and processed, selecting and processing the aggregation level that is one lower than the most recent aggregation level as the selected aggregation level, selecting all the groups whose aggregation level is the same as the selected aggregation level and repeating a-f.

10. The network monitor of claim 6, wherein the processor is adapted to sort the groups by:
determining, for each group, a percentage of active network users;
sorting the groups in descending order of percentage of active network users; and
assigning each network user to a single group, giving priority to the groups with the highest percentage of active network users.

## Patentansprüche

1. Verfahren zum Entdecken von Netzwerkentitäten in einem Netzwerk, das eine Vielzahl von Netzwerkentitäten aufweist, die Netzwerkbenutzer und Netzwerkaktivposten enthalten, umfassend:
Überwachen und Speichern von Netzwerkverkehr, wobei Überwachen enthält, Netzwerkentitäten in dem Netzwerkverkehr zu finden;
wenn die Netzwerkentitäten Netzwerkaktivposten sind, Bestimmen, ob die Netzwerkentitäten kritische Netzwerkaktivposten sind, wobei Bestimmen enthält, einen Aktivpostenentdeckungsalgorithmus anzuwenden, um kritische Netzwerkaktivposten durch Vergleichen der Zahl von Ereignissen für die Netzwerkentität mit der Zahl von Ereignissen für alle Aktivposten automatisch zu identifizieren;
wenn die Netzwerkentitäten Netzwerkbenutzer sind, automatisches Klassifizieren der Netzwerkbenutzer in Benutzergruppen, wobei automatisches Klassifizieren der Netzwerkbenutzer in Benutzergruppen umfasst
Zuweisen von Netzwerkbenutzern zu Benutzergruppen, wobei Zuweisen von Netzwerkbenutzern zu Benutzergruppen enthält, einen oder mehrere Netzwerkbenutzer mehreren Benutzergruppen zuzuweisen;
Sortieren der Gruppen, wobei Sortieren der Gruppen enthält, Netzwerkbenutzer in Durchschnittsgruppen und Ausreißergruppen zu sortieren, wobei die Durchschnittsgruppen Gruppen umfassen, deren Prozentanteil aktiver Netzwerkbenutzer über einem Schwellenwert ist, und Ausreißergruppen Gruppen umfassen, deren Prozentanteil aktiver Netzwerkbenutzer unter dem Schwellenwert ist; und
Verarbeiten der Gruppen derart, dass jeder Netzwerkbenutzer ein Mitglied einer einzelnen Gruppe ist; und
Anzeigen des Netzwerkverkehrs als eine Funktion der kritischen Netzwerkaktivposten und der Benutzergruppen.

2. Verfahren nach Anspruch 1, wobei Sortieren der Gruppen enthält, einen Kundenrepräsentationsalgorithmus auf die Gruppen anzuwenden, wobei der Kundenrepräsentationsalgorithmus verschiedene Sätze von Gruppen, die einen Netzwerkbenutzersatz basierend auf verschiedenen Aggregationsniveaus repräsentieren, präsentiert, wobei das Aggregationsniveau einer Gruppe von dem Verhältnis von Netzwerkbenutzern, die Mitglieder dieser Gruppe sind, zu der gesamten Zahl von Netzwerkbenutzern abhängig ist.

3. Verfahren nach Anspruch 1, wobei Sortieren der Gruppen enthält:
Bestimmen, für jede Gruppe, eines Prozentanteils aktiver Netzwerkbenutzer (915);
Sortieren der Gruppen in absteigender Reihenfolge des Prozentanteils aktiver Netzwerkbenutzer (920); und
Zuweisen jedes Netzwerkbenutzers zu einer einzelnen Gruppe, wobei den Gruppen mit dem höchsten Prozentanteil aktiver Netzwerkbenutzer Priorität gegeben wird (940).

4. Verfahren nach Anspruch 1, wobei Bestimmen, ob die Netzwerkentitäten kritische Netzwerkaktivposten sind, enthält:
Bestimmen, für jeden der Netzwerkaktivposten, von Ereignissen, Paketen und Benutzern pro Netzwerkaktivposten (1210);
für jeden in dem Netzwerkverkehr gefundenen Netzwerkaktivposten, wenn die Ereignisse pro Aktivposten des Aktivpostens größer sind als die Ereignisse pro Aktivposten eines ersten Prozentils aller in dem Netzwerkverkehr gefundenen Aktivposten und wenn die Pakete pro Aktivposten des Aktivpostens größer sind als die Pakete pro Aktivposten eines zweiten Prozentils aller in dem Netzwerkverkehr gefundenen Aktivposten, Bezeichnen des Aktivpostens als einen kritischen Aktivposten (1220); und
für jeden in dem Netzwerkverkehr gefundenen Netzwerkaktivposten, wenn die Benutzer pro Aktivposten des Aktivpostens größer sind als die Benutzer pro Aktivposten eines dritten Prozentils aller in dem Netzwerkverkehr gefundenen Aktivposten und wenn die Pakete pro Aktivposten des Aktivpostens größer sind als die Pakete pro Aktivposten eines vierten Prozentils aller in dem Netzwerkverkehr gefundenen Aktivposten, Bezeichnen des Aktivpostens als einen kritischen Aktivposten (1230).

5. Computerlesbares Medium, das computerlesbare Anweisungen zum Steuern eines Computers trägt, um das Verfahren eines vorstehenden Anspruchs auszuführen.

6. Netzwerküberwachungsvorrichtung (108), angepasst zur Verwendung in einem Netzwerk, das eine Vielzahl von Netzwerkentitäten aufweist, die Netzwerkbenutzer und Netzwerkaktivposten enthalten, umfassend:
eine Datenerfassungsvorrichtung (131), wobei die Datenerfassungsvorrichtung angepasst ist, Informationen zu erfassen, die Netzwerkverkehr anzeigen; und
eine Datenanalysevorrichtung (135), die mit der Datenerfassungsvorrichtung verbunden ist, wobei die Datenanalysevorrichtung angepasst ist, die durch die Datenerfassungsvorrichtung erfassten Informationen zu decodieren und zu analysieren;
einen Prozessor, der mit der Datenanalysevorrichtung verbunden ist, wobei der Prozessor angepasst ist, Netzwerkentitäten in dem Netzwerkverkehr zu finden und die Netzwerkentitäten, die gefunden werden, automatisch zu klassifizieren, wobei:
wenn die Netzwerkentitäten Netzwerkaktivposten sind, der Prozessor angepasst ist zum Bestimmen, ob die Netzwerkentitäten kritische Netzwerkaktivposten sind, wobei Bestimmen enthält, einen Aktivpostenentdeckungsalgorithmus anzuwenden, um kritische Netzwerkaktivposten durch Vergleichen der Zahl von Ereignissen für die Netzwerkentität mit der Zahl von Ereignissen für alle Aktivposten automatisch zu identifizieren; und
wenn die Netzwerkentitäten Netzwerkbenutzer sind, der Prozessor angepasst ist zum automatischen Klassifizieren der Netzwerkbenutzer in Benutzergruppen durch Zuweisen von Netzwerkbenutzern zu Benutzergruppen, wobei Zuweisen von Netzwerkbenutzern zu Benutzergruppen enthält
einen oder mehrere Netzwerkbenutzer mehreren Benutzergruppen zuzuweisen;
Sortieren der Gruppen, wobei Sortieren der Gruppen enthält, Netzwerkbenutzer in Durchschnittsgruppen und Ausreißergruppen zu sortieren, wobei die Durchschnittsgruppen Gruppen umfassen, deren Prozentanteil aktiver Netzwerkbenutzer über einem Schwellenwert ist, und Ausreißergruppen Gruppen umfassen, deren Prozentanteil aktiver Netzwerkbenutzer unter dem Schwellenwert ist; und
Verarbeiten der Gruppen derart, dass jeder Netzwerkbenutzer ein Mitglied einer einzelnen Gruppe ist; und
eine Benutzerschnittstelle (146), die mit dem Prozessor verbunden ist, wobei die Benutzerschnittstelle angepasst ist zum Anzeigen des Netzwerkverkehrs als eine Funktion der kritischen Netzwerkaktivposten und der Benutzergruppen.

7. Netzwerküberwachungsvorrichtung nach Anspruch 6, wobei der Prozessor angepasst ist, die Gruppen zu sortieren durch:
Bestimmen, für jede Gruppe, eines Prozentanteils aktiver Netzwerkbenutzer;
Identifizieren von Durchschnittsgruppen, wobei Durchschnittsgruppen Kundengruppen mit Prozentanteilen aktiver Netzwerkbenutzer über einem im Voraus bestimmten Schwellenwert sind;
Eliminieren von Durchschnittsgruppen, deren Netzwerkbenutzer alle Mitglieder einer größeren Durchschnittsgruppe sind; und
Sortieren der verbleibenden Durchschnittsgruppen in absteigender Reihenfolge des Prozentanteils aktiver Netzwerkbenutzer; und
wobei Verarbeiten der Gruppen derart, dass jeder Netzwerkbenutzer ein Mitglied einer einzelnen Gruppe ist, enthält:
Zuweisen jedes Netzwerkbenutzers in einer oder mehreren Durchschnittsgruppen zu einer einzelnen Durchschnittsgruppe, wobei den Durchschnittsgruppen mit dem höchsten Prozentanteil aktiver Netzwerkbenutzer Priorität gegeben wird;
Bestimmen, ob eine der Kundengruppen einen Prozentanteil aktiver Netzwerkbenutzer unter dem im Voraus definierten Schwellenwert aufweist;
wenn eine der Kundengruppen einen Prozentanteil aktiver Netzwerkbenutzer unter dem im Voraus definierten Schwellenwert aufweist, erneutes Klassifizieren dieser Kundengruppen als Ausreißergruppen;
Entfernen aller Netzwerkbenutzer, die Mitglieder einer der verbleibenden Durchschnittsgruppen sind, aus den Ausreißergruppen;
Sortieren der Ausreißergruppen in absteigender Reihenfolge des Prozentanteils aktiver Netzwerkbenutzer; und
Zuweisen jedes Netzwerkbenutzers in einer oder mehreren Ausreißergruppen zu einer einzelnen Ausreißergruppe, wobei den Ausreißergruppen mit dem höchsten Prozentanteil aktiver Netzwerkbenutzer Priorität gegeben wird.

8. Netzwerküberwachungsvorrichtung nach Anspruch 6, wobei der Prozessor angepasst ist, die Gruppen zu sortieren durch:
Berechnen, für jede Gruppe, des Verhältnisses von Netzwerkbenutzern, die Mitglieder der Gruppe sind, zu der gesamten Zahl von Netzwerkbenutzern;
Abbilden jeder Gruppe auf ein Aggregationsniveau als eine Funktion des für jede Gruppe berechneten Verhältnisses;
Auswählen und Verarbeiten eines ausgewählten Aggregationsniveaus, wobei Auswählen und Verarbeiten enthält:
a) Auswählen sämtlicher der Gruppen, deren Aggregationsniveau das gleiche wie das ausgewählte Aggregationsniveau ist;
b) Sortieren der ausgewählten Gruppen in abnehmender Reihenfolge des Prozentanteils der Netzwerkbenutzer;
c) innerhalb der ausgewählten Gruppen in dem ausgewählten Aggregationsniveau, Zuweisen jedes Netzwerkbenutzers zu einer und nur einer Gruppe, wobei den Gruppen mit dem höchsten Prozentanteil von Netzwerkbenutzern Priorität gegeben wird;
d) wenn das Aggregationsniveau einer Gruppe innerhalb der ausgewählten Gruppe unter das ausgewählte Aggregationsniveau fällt, nachdem Netzwerkbenutzer entfernt werden, Abbilden der Gruppe auf ihr entsprechendes Aggregationsniveau;
e) Entfernen sämtlicher der Netzwerkbenutzer, die den ausgewählten Gruppen in dem ausgewählten Aggregationsniveau zugewiesen wurden, aus den verbleibenden Gruppen; und
f) Auswählen und Verarbeiten eines anderen Aggregationsniveaus, bis jeder Netzwerkbenutzer nur einer Gruppe zugewiesen ist.

9. Netzwerküberwachungsvorrichtung nach Anspruch 8, wobei Auswählen und Verarbeiten eines anderen Aggregationsniveaus enthält:
Bestimmen, ob das Aggregationsniveau des höchsten Niveaus ausgewählt und verarbeitet wurde;
wenn das Aggregationsniveau des höchsten Niveaus nicht ausgewählt und verarbeitet wurde, Bestimmen, ob das zuletzt ausgewählte Aggregationsniveau das Aggregationsniveau des höchsten Niveaus ist;
wenn das Aggregationsniveau des höchsten Niveaus nicht ausgewählt und verarbeitet wurde und wenn das zuletzt ausgewählte Aggregationsniveau nicht das Aggregationsniveau des höchsten Niveaus ist, Auswählen und Verarbeiten des Aggregationsniveaus, das eines höher ist als das letzte Aggregationsniveau, als das ausgewählte Aggregationsniveau, Auswählen sämtlicher der Gruppen, deren Aggregationsniveau das gleiche ist wie das ausgewählte Aggregationsniveau, und Wiederholen von a-f; und
wenn das höchste Aggregationsniveau ausgewählt und verarbeitet wurde, Auswählen und Verarbeiten des Aggregationsniveaus, das eines niedriger ist als das letzte Aggregationsniveau, als das ausgewählte Aggregationsniveau, Auswählen sämtlicher der Gruppen, deren Aggregationsniveau das gleiche ist wie das ausgewählte Aggregationsniveau, und Wiederholen von af.

10. Netzwerküberwachungsvorrichtung nach Anspruch 6, wobei der Prozessor angepasst ist, die Gruppen zu sortieren durch:
Bestimmen, für jede Gruppe, eines Prozentanteils aktiver Netzwerkbenutzer;
Sortieren der Gruppen in absteigender Reihenfolge des Prozentanteils aktiver Netzwerkbenutzer; und
Zuweisen jedes Netzwerkbenutzers zu einer einzelnen Gruppe, wobei den Gruppen mit dem höchsten Prozentanteil aktiver Netzwerkbenutzer Priorität gegeben wird.

## Revendications

1. Procédé de découverte d'entités de réseau dans un réseau ayant une pluralité d'entités de réseau, comprenant des utilisateurs de réseau et des actifs de réseau, comprenant les étapes suivantes :
surveiller et stocker un trafic de réseau, où la surveillance comprend de trouver des entités de réseau dans le trafic de réseau ;
si les entités de réseau sont des actifs de réseau, déterminer si les entités de réseau sont des actifs de réseau critiques, où déterminer comprend d'appliquer un algorithme de découverte d'actifs pour identifier automatiquement des actifs de réseau critiques en comparant le nombre d'événements pour l'entité de réseau avec le nombre d'événements pour tous les actifs ;
si les entités de réseau sont des utilisateurs de réseau, classer les utilisateurs de réseau automatiquement en groupes d'utilisateurs, où classer les utilisateurs de réseau en groupes d'utilisateurs comprend automatiquement les étapes suivantes :
attribuer des utilisateurs de réseau à des groupes d'utilisateurs, où attribuer des utilisateurs de réseau à des groupes d'utilisateurs comprend d'attribuer un ou plusieurs utilisateurs de réseau à des groupes d'utilisateurs multiples ;
classer les groupes, où classer les groupes comprend de classer des utilisateurs de réseau en des groupes classiques et en des groupes atypiques où les groupes classiques comprennent des groupes dont le pourcentage d'utilisateurs de réseau actifs est supérieur à un seuil et des groupes atypiques comprennent des groupes dont le pourcentage d'utilisateurs de réseau actifs est inférieur au seuil ;
et
traiter les groupes de manière à ce que chaque utilisateur de réseau soit un membre d'un groupe unique ; et
afficher le trafic de réseau comme une fonction des actifs de réseau critiques et des groupes d'utilisateurs.

2. Procédé selon la revendication 1, dans lequel classer les groupes comprend d'appliquer un algorithme de représentation de client aux groupes, où l'algorithme de représentation de client présente différents ensembles de groupes qui représentent un ensemble d'utilisateurs de réseau sur la base de différents niveaux d'agrégation, où le niveau d'agrégation d'un groupe dépend du ratio d'utilisateurs de réseau qui sont membres de ce groupe sur le nombre total d'utilisateurs de réseau.

3. Procédé selon la revendication 1, dans lequel classer les groupes comprend les étapes suivantes :
déterminer, pour chaque groupe, un pourcentage d'utilisateurs de réseau actifs (915) ;
classer les groupes en ordre décroissant de pourcentage d'utilisateurs de réseau actifs (920) ; et
attribuer chaque utilisateur de réseau à un groupe unique, en donnant la priorité aux groupes ayant le pourcentage le plus élevé d'utilisateurs de réseau actifs (940).

4. Procédé selon la revendication 1, dans lequel déterminer si les entités de réseau sont des actifs de réseau critiques comprend les étapes suivantes :
déterminer, pour chacun des actifs de réseau, des événements, des paquets et des utilisateurs par actif de réseau (1210) ;
pour chaque actif de réseau trouvé dans le trafic de réseau, si les événements par actif de l'actif sont plus nombreux que les événements par actif d'un premier percentile de tous les actifs trouvés dans le trafic de réseau et si les paquets par actif de l'actif sont plus nombreux que les paquets par actif d'un deuxième percentile de tous les actifs trouvés dans le trafic de réseau, désigner ledit actif comme un actif critique (1220) ; et
pour chaque actif de réseau trouvé dans le trafic de réseau, si les utilisateurs par actif de l'actif sont plus nombreux que les utilisateurs par actif d'un troisième percentile de tous les actifs trouvés dans le trafic de réseau et si les paquets par actif de l'actif sont plus nombreux que les paquets par actif d'un quatrième percentile de tous les actifs trouvés dans le trafic de réseau, désigner ledit actif comme actif critique (1230).

5. Support lisible par ordinateur acheminant des instructions lisibles par ordinateur pour contrôler un ordinateur pour exécuter le procédé selon l'une quelconque des revendications précédentes.

6. Moniteur de réseau (108) conçu pour être utilisé dans un réseau ayant une pluralité d'entités de réseau, comprenant des utilisateurs de réseau et des actifs de réseau, comprenant :
un collecteur de données (131), où le collecteur de données est conçu pour capturer des informations indicatives d'un trafic de réseau ; et
un analyseur de données (135) connecté au collecteur de données, où l'analyseur de données est conçu pour décoder et analyser les informations capturées par le collecteur de données ;
un processeur connecté à l'analyseur de données, où le processeur est conçu pour trouver des entités de réseau dans le trafic de réseau et classer automatiquement les entités de réseau qui sont trouvées, où :
si les entités de réseau sont des actifs de réseau, le processeur est conçu pour déterminer si les entités de réseau sont des actifs de réseau critiques, où déterminer comprend d'appliquer un algorithme de découverte d'actifs pour identifier automatiquement des actifs de réseau critiques en comparant le nombre d'événements pour l'entité de réseau avec le nombre d'événements pour tous les actifs ; et
si les entités de réseau sont des utilisateurs de réseau, le processeur est conçu pour classer les utilisateurs de réseau automatiquement en groupes d'utilisateurs en attribuant des utilisateurs de réseau à des groupes d'utilisateurs, où attribuer des utilisateurs de réseau aux groupes d'utilisateurs comprend les étapes suivantes :
attribuer un ou plusieurs utilisateurs de réseau à des groupes d'utilisateurs multiples ;
classer les groupes, où classer les groupes comprend de classer des utilisateurs de réseau en groupes classiques et en groupes atypiques, où les groupes classiques comprennent des groupes dont le pourcentage d'utilisateurs de réseau actifs est supérieur à un seuil et des groupes atypiques comprennent des groupes dont le pourcentage d'utilisateurs de réseau actifs est inférieur au seuil ; et
traiter les groupes de manière à ce que chaque utilisateur de réseau soit un membre d'un groupe unique ; et
une interface d'utilisateur (146) connectée au processeur, où l'interface d'utilisateur est conçue pour afficher le trafic de réseau comme une fonction des actifs de réseau critiques et des groupes d'utilisateurs.

7. Moniteur de réseau selon la revendication 6, dans lequel le processeur est conçu pour classer les groupes en :
déterminant, pour chaque groupe, un pourcentage d'utilisateurs de réseau actifs ;
identifiant les groupes classiques, où les groupes classiques sont des groupes de clients avec des pourcentages d'utilisateurs de réseau actifs supérieurs à un seuil prédéfini ;
éliminant les groupes classiques dont les utilisateurs de réseau sont tous membres d'un groupe classique plus grand ; et
classant les groupes classiques restants dans un ordre décroissant de pourcentage d'utilisateurs de réseau actifs ; et
où traiter les groupes de manière à ce que chaque utilisateur de réseau soit un membre d'un groupe unique comprend les étapes suivantes :
attribuer chaque utilisateur de réseau d'un ou plusieurs groupes classiques à un groupe classique unique, en donnant la priorité aux groupes classiques ayant le pourcentage d'utilisateurs de réseau actifs le plus élevé ;
déterminer si l'un quelconque des groupes de clients a un pourcentage d'utilisateurs de réseau actifs inférieur au seuil prédéfini ;
si l'un quelconque des groupes de clients a un pourcentage d'utilisateurs de réseau actifs inférieur au seuil prédéfini, reclasser ces groupes de clients comme groupes atypiques ;
retirer des groupes atypiques tous les utilisateurs de réseau qui sont membres de l'un des groupes classiques restants ;
classer les groupes atypiques dans un ordre décroissant de pourcentage d'utilisateurs de réseau actifs ; et
attribuer chaque utilisateur de réseau d'un ou plusieurs groupes atypiques à un groupe atypique unique, en donnant la priorité aux groupes atypiques ayant le pourcentage d'utilisateurs de réseau actifs le plus élevé.

8. Moniteur de réseau selon la revendication 6, dans lequel le processeur est conçu pour classer les groupes en :
calculant, pour chaque groupe, le ratio d'utilisateurs de réseau qui sont membres du groupe pour le nombre total d'utilisateurs de réseau ;
mappant chaque groupe à un niveau d'agrégation comme une fonction du ratio calculé pour chaque groupe ;
sélectionnant et traitant un niveau d'agrégation sélectionné, où sélectionner et traiter comprend les étapes suivantes :
a) sélectionner tous les groupes dont le niveau d'agrégation est le même que le niveau d'agrégation sélectionné ;
b) classer les groupes sélectionnés dans un ordre décroissant de pourcentage d'utilisateurs de réseau ;
c) dans les groupes sélectionnés dans le niveau d'agrégation sélectionné, attribuer chaque utilisateur de réseau à un et seulement un groupe, en donnant la priorité aux groupes ayant le pourcentage le plus élevé d'utilisateurs de réseau ;
d) si le niveau d'agrégation d'un groupe dans le groupe sélectionné tombe en dessous du niveau d'agrégation sélectionné après que les utilisateurs de réseau ont été retirés, mapper le groupe à son niveau d'agrégation approprié ;
e) retirer tous les utilisateurs de réseau, attribués aux groupes sélectionnés dans le niveau d'agrégation sélectionné, des groupes restants ; et
f) sélectionner et traiter un autre niveau d'agrégation jusqu'à ce que chaque utilisateur de réseau soit attribué à seulement un groupe.

9. Moniteur de réseau selon la revendication 8, dans lequel sélectionner et traiter un autre niveau d'agrégation comprend les étapes suivantes :
déterminer si le niveau d'agrégation de niveau le plus élevé a été sélectionné et traité ;
si le niveau d'agrégation de niveau le plus élevé n'a pas été sélectionné et traité, déterminer si le niveau d'agrégation le plus récent sélectionné est le niveau d'agrégation de niveau le plus élevé ;
si le niveau d'agrégation de niveau le plus élevé n'a pas été sélectionné et traité et si le niveau d'agrégation le plus récent sélectionné n'est pas le niveau d'agrégation de niveau le plus élevé, sélectionner et traiter le niveau d'agrégation qui est juste supérieur au niveau d'agrégation le plus récent comme niveau d'agrégation sélectionné, sélectionner tous les groupes dont le niveau d'agrégation est le même que le niveau d'agrégation sélectionné et répéter les étapes a) à f) ; et
si le niveau d'agrégation de niveau le plus élevé a été sélectionné et traité, sélectionner et traiter le niveau d'agrégation qui est juste inférieur au niveau d'agrégation le plus récent comme niveau d'agrégation sélectionné, sélectionner tous les groupes dont le niveau d'agrégation est le même que le niveau d'agrégation sélectionné et répéter les étapes a) à f).

10. Moniteur de réseau selon la revendication 6, dans lequel le processeur est conçu pour classer les groupes en :
déterminant, pour chaque groupe, un pourcentage d'utilisateurs de réseau actifs ;
classant les groupes dans un ordre décroissant de pourcentage d'utilisateurs de réseau actifs ; et
attribuant chaque utilisateur de réseau à un groupe unique, en donnant la priorité aux groupes ayant le pourcentage d'utilisateurs de réseau actifs le plus élevé.
